# FASCICULE DE BREVET EUROPEEN

(11) **EP 2 401 349 B1**
(45) Date de publication et mention de la délivrance du brevet: **27.06.2018**
(21) Numéro de dépôt: 10708617.5
(22) Date de dépôt: 26.02.2010
(51) Int. Cl.: C10M 169/02, C10M 169/06, C10N 10/02, C10N 10/04, C10N 10/06, C10N 10/08, C10N 20/02, C10N 20/06, C10N 20/04, C10N 30/06, C10N 40/02, C10N 40/04

(54) **COMPOSITION DE GRAISSE**
SCHMIERMITTELZUSAMMENSETZUNG
GREASE COMPOSITION

(30) Priorité: 27.02.2009 FR 0900898
(43) Date de publication de la demande: 04.01.2012
(73) Titulaire: TOTAL MARKETING SERVICES, 92800 Puteaux (FR)
(72) Inventeur: BOUFFET, Alain, F-69440 Taluyers (FR); BARDIN, Franck, F-38200 Vienne (FR)
(74) Mandataire: Hirsch & Associés
(86) Numéro de dépôt international: PCT/IB2010/050851
(87) Numéro de publication internationale: WO 2010/097778

(56) Documents cités:
- WO-A-2008/047595
- JP-A- 55 082 196
- DATABASE WPI Week 200322 Thomson Scientific, London, GB; AN 2003-224845 XP002548847 & JP 2002 363589 A (KOYO SEIKO CO LTD) 18 décembre 2002 (2002-12-18)

## Description

### Domaine de l'invention

La présente invention est relative à des compositions de graisse, en particulier utilisables pour le graissage de paliers de roulement.

### Arrière plan technologique de l'invention

Il existe de nombreuses applications où les lubrifiants liquides ne conviennent pas parce qu'ils « dérivent » par rapport au point de graissage. Il s'agit en particulier des paliers à roulement et à glissement, des engrenages ouverts, des câbles métalliques et des entraînements par chaîne, et plus généralement des applications ne comportant pas de système d'étanchéité.

Pour ces applications, on utilise des graisses lubrifiantes, qui sont des substances solides ou semi fluides résultant de la dispersion d'un épaississant dans un lubrifiant liquide, intégrant des additifs qui leur confèrent des propriétés particulières.

La très large majorité des graisses lubrifiantes est préparée avec des épaississants de type sels métalliques d'acides gras. On dissout l'acide gras dans l'huile de base à une température relativement élevée, et on ajoute ensuite l'hydroxyde de métal approprié. Après avoir fait évaporer par cuisson l'eau qui se forme lors de la réaction, on refroidit pendant un laps de temps défini, pour former le réseau de savon.

Des hydroxydes de Lithium, Sodium, Calcium, Baryum, Titane ou Aluminium conviennent comme composés métalliques pour la fabrication de la graisse. Les acides gras à chaîne longue, de l'ordre de C14 à C28, principalement C18, proviennent généralement d'huiles végétales (huile de ricin par exemple), ou animales (par exemple suif). Ils peuvent être hydrogénés. Le dérivé le plus connu est l'acide 12 hydroxystéarique provenant de l'acide ricinoléique.

On peut également utiliser, en combinaison avec les acides gras à longue chaîne, des acides à chaîne courte, comprenant typiquement entre 6 et 12 atomes de carbone, comme par exemple l'acide azélaique, .... Il se forme alors des graisses dites complexes.

Les savons forment une structure fibreuse qui retient l'huile lubrifiante. Les savons d'Aluminium présentent, eux, une structure de gel sphérique.

D'autres épaississants inorganiques comme, par exemple, la bentonite, le gel de silice peuvent être utilisés. On trouve également parmi les épaississants des polycarbamides (polyurées).

Ces épaississants sont utilisés généralement pour des applications spéciales, par exemple les graisses hautes températures.

Pour certaines applications, par exemple pour les paliers à roulement lubrifiés, mais également pour les glissières de machine outil, ou pour les systèmes de graissage centralisés dans les automobiles, les transmissions, il est souhaitable que les graisses aient un bas coefficient de friction, de manière à augmenter le rendement des systèmes et éventuellement générer des économies de carburant (propriétés dites « fuel eco » ou « économiseuses » de carburant). Ces graisses doivent en outre rester suffisamment consistantes pour ne pas couler hors du point de graissage, et jouer leur rôle de réduction de l'usure et de prévention du grippage.

La demande de brevet JP 55082196 divulgue certaines compositions de graisse incorporant, à titre d'additifs, des lubrifiants solides sous forme particulaire pour améliorer le coefficient de frottement et prévenir le grippage des systèmes.

Il est connu que les lubrifiants solides, en particulier le polytetrafluoroethylène (PTFE), doivent être incorporés dans les graisses à des teneurs élevées, supérieures à 5% ou encore à 10 % en masse, parfois jusqu'à 40 % en masse, pour qu'un effet soit constaté. Il est également connu que les propriétés anti friction et anti usure de ces solides particulaires sont améliorées lorsque les particules sont de taille nanométrique. La demande de brevet WO 2008/069936 divulgue ainsi l'emploi de lubrifiants solides sous forme de nanoparticules de diamètre inférieur à 500 nm dans des lubrifiants liquides ou dans des graisses, pour améliorer leurs propriétés anti usure et de lubrification. Les quantités de lubrifiants solides nécessaires pour obtenir un effet significatif sont encore toutefois très importantes, de l'ordre de 20 % en masse, supérieures à 15 % en masse. Ceci pose des problèmes de coût des formules, et une teneur aussi élevée pourrait également altérer d'autres propriétés des lubrifiants et des graisses, ayant notamment un effet sur leur viscosité, ou sur leur consistance s'agissant des graisses.

De tels lubrifiants solides nanoparticulaires, par exemple en polytétrafluoroéthylène (PTFE), peuvent également être incorporés dans les huiles moteurs, pour augmenter leur pouvoir lubrifiant, par exemple à des teneurs comprises entre 0,01 et 10 % en masse, en combinaison avec des composés de type organomolybdène, dithiophosphate de Zinc, composés au Bore, ...ainsi que décrit dans la demande de brevet US 2005/0124504.

EP 2 077 318 A et JP 2002 363589 divulguent des compositions de graisse comprenant une huile de base, un épaississant et de la poudre de résine PTFE.

Toutefois, il semble que l'ensemble des paramètres permettant d'atteindre un effet anti friction maximal des nanoparticules solides dans les lubrifiants ou dans les graisses n'aient pas été ajustés dans l'art antérieur, en particulier les paramètres qui déterminent la plus ou moins bonne dispersion de ces solides particuliers dans lesdits lubrifiants ou graisse. Ces paramètres peuvent se révéler sensiblement différents d'un milieu à l'autre, par exemple entre une graisse et un lubrifiant liquide, et dépendre de la nature respective des particules, des bases, des épaississants employés.

Il existe donc en particulier un besoin pour des compositions de graisse où l'effet anti friction des nanoparticules solides est amélioré. Accessoirement, il existe un besoin pour de telles graisses ayant aussi un effet anti usure amélioré.

De façon surprenante, la demanderesse a constaté qu'une graisse présentant une combinaison spécifique d'huile de base synthétique, de savons métalliques d'acides gras et d'additifs de type lubrifiant solide sous forme nano particulaire, présentait de très bas coefficients de friction, se traduisant par des rendements très élevés sur des systèmes de paliers de roulement lubrifiés.

### Brève description de l'invention :

La présente invention est relative à des compositions de graisse comprenant, par rapport au poids total de la composition :- (A) de 50 à 90% en poids d'une huile de base synthétique composée majoritairement d'alkylaromatique(s) (A1) choisis parmi les huiles de type alkylbenzène ou alkylnaphtalène,- (B) de 1 à 15% en poids d'un épaississant composé majoritairement d'au moins un savon métallique d'acides gras,- (C) au moins 0,1% en poids d'un lubrifiant solide composé majoritairement de polytétrafluoroéthylène nano particulaire, dont au moins 85 % des particules ont une taille inférieure au micron, étant entendu que la taille des particules est mesurée selon la méthode décrite dans la demande WO 2004/067608 au passage de la page 20, ligne 5 à la page 22, ligne 4, et l'huile de base synthétique (A) comprend au moins une autre huile (A2) de base synthétique choisie parmi les polyalphaoléfines, la quantité de l'huile (A2) étant comprise entre 5 et 15% en poids par rapport au poids total de la composition. Un avantage de l'invention est l'obtention d'effet anti friction significatifs avec de faibles quantités de nano particules solides, typiquement inférieures ou égales à 10% en masse, ou encore inférieures ou égales à 5% en masse de nano particules par rapport au poids total des compositions. On a ainsi trouvé un moyen économique de produire des compositions de graisse à bas coefficient de friction, qui peuvent donc conduire à des rendements élevés sur des systèmes de roulement, ou permettre des économies d'énergie sur divers systèmes, par exemple les transmissions, en particulier les transmissions automobiles ou les joints homocinétiques.

Un autre avantage de l'invention est que cet effet peut être obtenu avec des épaississants conventionnels bon marché et disponibles que sont les savons métalliques d'acides gras. Certains épaississants, par exemple les polyurées, sont chers, difficiles à fabriquer et pas accessibles en grandes quantités.

Ces savons présentent en outre l'avantage d'une très bonne tenue mécanique, comparativement aux autres épaississants, par exemples les polyurées. Ainsi, les graisses selon l'invention ne se déstructurent pas lorsqu'elles sont soumises à des contraintes mécaniques, et peuvent être employées dans les applications où aucun système d'étanchéité n'est prévu, sans crainte de fuite hors du point de graissage.

L'huile sous forme d'alkylaromatiques (A1) constitue de préférence au moins 80%, en poids, de l'huile de base (A) dans ladite composition.

Le(s) savon(s) métallique(s) (B) constitue de préférence au moins 80% en poids, de l'épaississant (B) dans ladite composition.

Le lubrifiant solide (C) est constitué de préférence d'au moins 80%, notamment au moins 90%, en poids de polytetrafluoroethylène nano particulaire.

Selon un mode de réalisation, lubrifiant solide (C) n'est constitué que de polytetrafluoroethylène nano particulaire.

De préférence, l'épaississant (B) est dépourvu de composés d'urée.

De préférence, la composition est dépourvue de carbonate de calcium.

De préférence, elle comprend 0,1 à 10% en poids, notamment 2 à 7 % en poids, de lubrifiant solide sous forme de polytetrafluoroethylène nano particulaire.

De préférence, les particules de polytetrafluoroethylène ont une taille moyenne comprise entre 150 et 800 nm.

Les huiles de base synthétiques peuvent être choisies parmi les huiles de type alkylbenzène ou alkylnaphtalène.

De préférence, les savons sont des savons métalliques simples d'acides gras comprenant de 14 à 28 atomes de carbone, saturés ou non, hydroxylés ou non, ou des savons métalliques complexes d'un ou plusieurs acides gras comprenant de 14 à 28 atomes de carbone, saturés ou non, hydroxylés ou non en combinaison avec un ou plusieurs acides carboxyliques à chaîne hydrocarbonée courte comprenant de 6 à 12 atomes de carbone.

Les savons métalliques d'acides gras peuvent être choisis parmi les savons de titane, d'aluminium, ou de métaux alcalins et alcalino terreux, de préférence le lithium, le calcium, le sodium, le baryum.

La composition selon l'invention peut comprendre un ou plusieurs agents anti usure et/ou extrême pression.

De préférence, la composition une huile de base (A) ayant une viscosité cinématique à 40°C, mesurée selon la norme ASTM D 445, comprise entre 10 et 120 mm²/s.

De préférence, la composition a une consistance selon la norme ASTM D217 supérieure à 265, de préférence comprise entre 265 et 475, ou entre 265 et 295, ou entre 310 et 340, ou entre 335 et 385 dixièmes de millimètres, ou en ce qu'elle a une consistance selon la norme ASTM D217 D217 supérieure à 400 dixièmes de millimètres, de préférence comprise entre 400 et 475 ou entre 445 et 475 dixièmes de millimètres

L'invention concerne aussi un procédé de préparation d'une graisse telle que définie plus haut, et qui comprend les étapes suivantes :
- dissolution d'un ou plusieurs acides gras dans une fraction de l'huile de base ou du mélange d'huile de base,
- ajout de composés métalliques, de préférence de type oxyde, hydroxyde ou carbonate métallique ou de chaux,
- saponification des acides gras par lesdits composés métalliques,
- incorporation du polytetrafluoroethylène nano particulaire dont au moins 85 % des particules ont une taille inférieure au micron.

L'invention concerne aussi l'utilisation de la composition de graisse telle que définie plus haut comme graisse pour les transmissions, en particulier transmissions automobiles.

L'invention concerne aussi l'utilisation de la composition de graisse telle que définie plus haut comme graisse pour les paliers à roulement lubrifiés, les glissières de machine outil ou les systèmes de graissage centralisés dans les automobiles.

On comprend dans le présent texte par composé « majoritairement de » le fait que la teneur en ce composé soit d'au moins 50% en poids du composé visé.

La teneur en question peut aussi atteindre au moins 80%, de préférence au moins 85 ou 90 ou 95% en poids, ou même substantiellement 100% en poids du composé visé.

### Description détaillée :

### Huiles de base :

Les compositions de graisse selon l'invention contiennent au moins une huile de base synthétique de type alkylaromatique choisis parmi les huiles de type alkylbenzène ou alkylnaphtalène. Ces huiles sont obtenues par alkylation de composés aromatiques par des composés tels que des oléfines, des paraffines monohalogénées ou monohydroxylées, ou d'autres agents d'alkylation, en présence d'un catalyseur acide, par exemple de type Friedel-Craft ou zéolites.

Les composés aromatiques peuvent être par exemple le benzène ou naphtalène. Les bases synthétiques alkylaromatiques résultantes peuvent être des mono ou polyalkyl, par exemple di ou tri alkyl aromatiques (par example mono, di, tri ou poly alkylbenzène ou naphtalène ou anthracène). Les substituants alkyl peuvent être linéaires ou ramifiés, et comportent de préférence de 9 à 24 atomes de carbone, préférentiellement de 12 à 24 atomes de carbone.

La présence de substituants comportant moins de 9, ou moins de 12 atomes de carbone peut conduire, notamment dans les bases de type alkylbenzène, à des composés trop volatils, et les substituants comportant plus de 24 atomes de carbone confèrent une trop forte viscosité pour les applications visées.

Ces différents composés peuvent être présents seuls ou en mélange dans les graisses selon l'invention. Ils possèdent un fort pouvoir solvant qui doit contribuer à une dispersion optimale des additifs dans les compositions selon l'invention.

La viscosité cinématique à 40 °C selon ASTM D445 de ces bases synthétiques alkylaromatiques est préférentiellement comprise entre10 et 120 cSt.
Lorsque des applications telles que les paliers lubrifiés ou le graissage centralisé pour automobile sont visées, on préférera des bases dont la viscosité cinématique à 40 °C selon ASTM D445 est comprise entre 10 et 80 cSt, préférentiellement entre 10 et 50 cSt, préférentiellement entre 20 et 40 cSt, de façon à garantir une bonne opérabilité, une bonne pompabilité, et de bonnes propriétés à froid, permettant une utilisation jusqu'à - 20 °C, ou encore -40°C.

Lorsque des applications telles que les transmissions sont visées, on préférera des bases dont la viscosité cinématique à 40 °C selon ASTM D445 est comprise entre 70 et 110 cSt, préférentiellement entre 30 et 40 cSt, préférentiellement entre 35 et 37 cSt, de façon à garantir un film d'huile adéquat sous des charges plus élevées.

Ces bases alkyl aromatiques sont, de préférence présente à des teneurs comprises entre 65 et 85% ou entre 70 et 80 % dans les compositions de graisse selon l'invention.

### Autres huiles de base :

Les compositions de graisse selon l'invention peuvent contenir, outre les bases décrites plus haut, d'autres huiles de base en moindre quantité.

La ou les autres huiles de base utilisées dans les compositions selon la présente invention peuvent être des huiles d'origine minérale ou synthétique des groupes I à VI selon les classes définies dans la classification API (American Petroleum Institute).

Les huiles de base minérales incluent tous types de bases obtenues par distillation atmosphérique et sous vide du pétrole brut, suivies d'opérations de raffinage tels qu'extraction au solvant, désalphatage, déparaffinage au solvant, hydrotraitement, hydrocraquage et hydroisomérisation, hydrofinition.

Les huiles de bases peuvent également être des huiles synthétiques, tels certains esters, silicones, glycols, polybutène, polyalphaoléfines (PAO).

Les huiles de bases peuvent également être des huiles d'origine naturelle, par exemple des esters d'alcool et d'acides carboxyliques pouvant être obtenus à partir de ressources naturelles telles que l'huile de tournesol, de colza, de palme, ....

On utilise, dans les compositions selon l'invention, des huiles synthétiques de type polyoalphaoléfines (PAO) en combinaison avec les bases synthétiques alkylaromatiques décrites plus haut. Les polyalphaoléfines sont par exemple obtenues à partir de monomères ayant de 4 à 32 atomes de carbone (par exemple octène, decène). Leur masse moléculaire moyenne en poids est typiquement comprise entre 250 et 3000.

Des mélanges d'huiles synthétiques et minérales peuvent également être employés. De préférence, les huiles de base autres que les bases synthétiques décrites plus haut sont présentes à des teneurs comprises entre 5 et 15% dans les compositions selon l'invention.

La viscosité cinématique à 40 °C selon ASTM D445 de l'huile de base ou du mélange d'huile de base utilisé dans les compositions selon l'invention est préférentiellement comprise entre10 et 120 cSt.

Lorsque des applications telles que les paliers lubrifiés ou le graissage centralisé pour automobile sont visées, on préférera une huile de base ou un mélange d'huile de base dont la viscosité cinématique à 40 °C selon ASTM D445 est comprise entre 10 et 80 cSt, préférentiellement entre 10 et 50 cSt, préférentiellement entre 20 et 40 cSt, de façon à garantir une bonne opérabilité, une bonne pompabilité, et de bonnes propriétés à froid, permettant une utilisation jusqu'à - 20 °C, ou encore jusqu'à - 40°C.

Lorsque des applications telles que les transmissions sont visées, on préférera une huile de base ou un mélange d'huile de base dont la viscosité cinématique à 40 °C selon ASTM D445 est comprise entre 70 et 110 cSt, préférentiellement entre 30 et 40 cSt, préférentiellement entre 35 et 37 cSt, de façon à garantir un film d'huile adéquat sous des charges plus élevées.

### Epaississants :

Les graisses selon l'invention sont épaissies avec des savons métalliques d'acides gras, qui peuvent êtres préparés séparément, ou in situ lors de la fabrication de la graisse (dans ce dernier cas, on dissout l'acide gras dans l'huile de base, puis on ajoute l'hydroxyde de métal approprié).

Ces épaississants sont des produits couramment employés dans le domaine des graisses, facilement disponibles et bon marché. Par ailleurs, les graisses ainsi épaissies présentent une très bonne stabilité mécanique, comparativement, par exemple, aux graisses à base de polyurées, ce qui permet une utilisation aisée dans les applications où la graisse se trouve dans une enceinte non confinée.
On utilise préférentiellement des acides gras à chaîne longue, comprenant typiquement de 10 à 28 atomes de carbone, saturée ou insaturée, éventuellement hydroxylée.
Les acides gras à chaîne longue (comprenant typiquement de 10 à 28 atomes de carbone), sont par exemple les acides caprique, laurique, myristique, palmitique, stéarique, arachidique, béhénique, oléiques, linoléique, érucique, et leurs dérivés hydroxylés. L'acide 12 hydroxystéarique est le dérivé le plus connu de cette catégorie, et préféré.

Ces acides gras à chaîne longue proviennent généralement d'huiles végétales, par exemple huile de palme, de ricin, de colza, de tournesol,... ou de graisses animales (suif, huile de baleine...).

On peut former des savons dits simples en utilisant un ou plusieurs acides gras à chaîne longue.

On peut également former des savons dits complexes en utilisant un ou plusieurs acides gras à chaîne longue en combinaison avec un ou plusieurs acides carboxyliques à chaîne hydrocarbonée courte comprenant au plus 8 atomes de carbone.

L'agent de saponification utilisé pour faire le savon peut être un composé métallique de Lithium, Sodium, Calcium, Baryum, Titane, Aluminium, préférentiellement Lithium et Calcium, et de préférence un hydroxyde, oxyde ou un carbonate de ces métaux.

On peut employer un ou plusieurs composés métalliques, ayant ou non le même cation métallique, dans les graisses selon l'invention. On peut ainsi associer des savons au lithium, combinés avec des savons au calcium dans une moindre proportion.

Les savons métalliques sont employés à des teneurs de l'ordre de 1 à 15 % en poids, préférentiellement de 2 à 10% ou encore de 4 à 10% ou de 4,5 à 6 % en poids dans les graisses selon l'invention.

Lorsque des applications telles que les paliers lubrifiés ou le graissage centralisé pour automobile sont visées, on préférera employer de 1 à 6 %, préférentiellement de 2 à 5% de savon(s) métallique(s), de manière à obtenir des graisses fluides ou semi fluides de grade 000 ou 00 selon la classification NLGI.

Lorsque des applications telles que les transmissions sont visées, on préférera employer de 6,5 à 15 %, préférentiellement de 7 à 13 % ou de 8 à 12 % de savon(s) métallique(s), de manière à obtenir des graisses de grade 0, de grade 1 ou de grade 2 selon la classification NLGI.

Dans tous les cas, ces teneurs en épaississant sont relativement faibles dans les graisses selon l'invention, de façon à obtenir des graisses dont la consistance correspond à un grade compris entre 000, 00, 0, 1 ou 2 selon la classification NLGI, et à favoriser une augmentation du rendement, des économies d'énergie ou un effet fuel eco, par exemple sur des systèmes tels que les paliers de roulement lubrifié, les systèmes de graissage centralisé pour véhicules ou les transmissions.

### Procédé de préparation des graisses :

Les graisses selon l'invention sont préférentiellement fabriquées en formant le savon métallique in situ.

On dissout un ou plusieurs acides gras dans une fraction de l'huile de base ou du mélange d'huile de base à température ambiante. Cette fraction est généralement de l'ordre de 40 % de la quantité totale d'huile contenue dans la graisse finale. Les acides gras peuvent être des acides longs, comprenant de 14 à 28 atomes de carbone, pour former un savon simple, éventuellement combiné à des acides gras courts, comprenant de 6 à 12 atomes de carbone, pour former des savons complexes.

On ajoute, à une température d'environ 60 °C, des composés métalliques, préférentiellement de type oxyde, hydroxyde ou carbonate métallique.

On peut ajouter ainsi un seul type de métal ou combiner plusieurs métaux. Le métal préféré des compositions selon l'invention est le lithium, éventuellement combiné, dans une moindre proportion, à du calcium.

On laisse se dérouler la réaction de saponification des acides gras par le ou les composés métalliques à une température d'environ 80 °C.

L'eau formée est ensuite évaporée par cuisson du mélange à une température d'environ 100 à 200°C.

La graisse est ensuite refroidie par la fraction restante d'huile de base.
On incorpore ensuite, à environ 80 °C, le polytetrafluoroethylène nano particulaire, et d'éventuels autres additifs.
On malaxe ensuite pendant un temps suffisant pour obtenir une composition de graisse homogène.

### Grade des graisses :

La consistance d'une graisse mesure sa dureté ou sa fluidité au repos. Elle est chiffrée par la profondeur de pénétration d'un cône de dimensions et de masse donnée. La graisse est préalablement soumise à un malaxage. Les conditions de mesure de la consistance d'une graisse sont définies par la norme ASTM D 217.
Selon leur consistance, les graisses sont réparties en 9 classes ou 9 grades NLGI (National Lubricating Grease Institute) couramment utilisés dans le domaine des graisses. Ces grades sont indiqués dans le tableau ci-dessous.

| Grade de NLGI | Consistance selon ASTM D 217 (dixième de millimètres) |
|---|---|
| 000 | 445 - 475 |
| 00 | 400 - 430 |
| 0 | 335 - 385 |
| 1 | 310 - 340 |
| 2 | 265 - 295 |
| 3 | 220 - 250 |
| 4 | 175 - 205 |
| 5 | 130 - 160 |
| 6 | 85 - 115 |

Les graisses selon l'invention ont une consistance supérieure à 265 dixièmes de millimètre, préférentiellement comprises entre 275 et 475 dixièmes de millimètre selon la norme ASTM D217. Préférentiellement, elles sont de grade NLGI 000, 00, 0, 1 ou 2, c'est-à-dire que leur consistance est respectivement comprise entre 445 et 475, ou entre 400 et 300, ou entre 335 et 385, ou entre 310 et 340, ou entre 265 et 295 dixièmes de millimètres selon ASTM D217.

Lorsque les applications telles que les paliers lubrifiés ou le graissage centralisé pour automobile sont visées, les graisses selon l'invention sont préférentiellement des graisses fluides ou semi fluide, de consistance supérieure à 400 dixièmes de millimètre, préférentiellement comprises entre 400 et 475 dixièmes de millimètre selon ASTM D217. Préférentiellement, elles sont de grade NLGI 00 ou 000, c'est-à-dire que leur consistance est respectivement comprise entre 400 et 430, ou 445 et 475 dixièmes de millimètres selon ASTM D217.

Lorsque les applications telles que les transmissions, joints homocinétiques sont visées, les graisses selon l'invention sont préférentiellement des graisses fluides ou semi fluides, de consistance supérieure à 265 dixièmes de millimètre, préférentiellement comprise entre 265 et 335 dixièmes de millimètre selon ASTM D217. Préférentiellement, elles sont de grade NLGI 0, 1 ou 2, c'est-à-dire que leur consistance est respectivement comprise entre 335 et 385, ou 310 et 340, ou 265 et 295 dixièmes de millimètres selon ASTM D217.

De façon générale, les graisses selon l'invention ont tendance à être plus fluides que la moyenne des graisses utilisées dans les applications considérées, de manière à favoriser une augmentation du rendement, des économies d'énergie ou un effet « fuel eco », par exemple sur des systèmes tels que les paliers de roulement lubrifié, les systèmes de graissage centralisé pour véhicules ou les transmissions.

### Nanoparticules de PTFE :

Les graisses selon l'invention contiennent du polytetrafluoroethylène (PTFE) nano particulaire.

Ce PTFE peut être ajouté à l'état de poudre sèche ou bien sous forme de dispersion concentrée, où la poudre est dispersée dans une huile lubrifiante de prédilution, par exemple une huile synthétique de type polyalkylaromatique ou PAO telles que décrites plus haut.

Le terme PTFE nanoparticulaire désigne une poudre ou une dispersion de poudre dans une huile, où au moins 85%, préférentiellement au moins 90%, encore plus préférentiellement au moins 95% (en nombre) des particules ont une taille inférieure au micron. De manière particulièrement préférée, 100 % en nombre des particules ont une taille inférieure au micron.

Dans tout le présent texte, la mesure de la taille des nano particules de PTFE se fait conformément à l'enseignement de la demande de brevet WO 2004/067608 (correspondant à la demande de brevet EP 1 594 682). On se rapportera au descriptif des mesures indiqué dans la demande WO 2004/067608 plus particulièrement :
- au passage de la page 16, ligne 15 à la page 17, ligne 13 pour une mesure à sec
- au passage de la page 17, ligne 14 à la page 20, ligne 4 pour une mesure dans de l'alcool iso propylique (IPA),
- au passage de la page 20, ligne 5 à la page 22, ligne 4 pour une mesure dans un milieu huileux, méthode de mesure qui est préférée dans le cadre de la présente invention,
- au passage de la page 22, ligne 5 à la page 24, ligne 4 pour une mesure dans de l'eau.

Préférentiellement, au moins 80%, ou au moins 80%, ou encore 95% en nombre, ou encore plus préférentiellement 100% des particules de PTFE dans ces poudres ou dispersions on une taille supérieure à 50 nm, préférentiellement supérieure à 100 nm. La présence de trop petites particules peut créer des problèmes de réagrégation des particules entre elles et pénaliser leur dispersion dans la graisse.

Le PTFE nanoparticulaire des graisses selon l'invention a de préférence une taille moyenne comprise entre 150 et 800 nm, ou encore entre 200 et 700 nm, ou encore entre 400 et 600 nm. Par taille moyenne, on entend moyenne de la distribution des tailles de particules.

Comme indiqué plus haut, ce PTFE nanométrique peut être préparé à partir de procédés décrits dans la demande de brevet EP 1 594 682 pré citée. De telles poudres ou dispersions sont commercialisées par la société Shamrock dans la gamme Nanoflon®. La distribution des tailles de particules des poudres ou des dispersions de PTFE utilisées dans les compositions de graisse selon l'invention sont mesurées avec analyseur de type Malvem, selon les méthodes appropriées décrites dans la demande de brevet WO 2004/067608 (EP1 594 682) précitée.

On préférera, pour la facilité de mise en oeuvre du mélange, incorporer les nanoparticules de PTFE sous la forme de dispersions, préférentiellement dans des huiles synthétiques de type alkylaromatique ou PAO, telles que décrites plus haut. Lorsqu'une dispersion est utilisée, elle constitue un concentré où les particules de PTFE représentent de préférence environ 20 à 50 % en poids, préférentiellement 25 à 35 % en poids ou encore 30 % en poids de la dispersion.

Le PTFE nanométrique est présent dans les compositions de graisse selon l'invention à des teneurs d'au moins 0,1% en poids préférentiellement entre 2 et 7%, encore plus préférentiellement entre 3 et 4,5 % ou encore 3 et 5%. Un des avantages de l'invention est de permettre un effet anti friction significatif avec une faible quantité de nano particules.

Les propriétés anti friction du PTFE sont connues. Il est également connu que ce type de lubrifiant solide voit ses propriétés améliorées lorsque les poudres ou dispersions qui les contiennent sont constituées de nano particules ; Toutefois, il importe également, pour conférer aux lubrifiants et graisses qui les contiennent des propriétés anti friction améliorées, que lesdites nano particules soient correctement dispersées.

Il semble que la combinaison de nano particules de PTFE avec des huiles de base alkylaromatiques et des savons métalliques d'acides gras mise en oeuvre dans les graisses selon l'invention permettent cette bonne dispersion et par conséquent, d'obtenir les excellents rendements qui ont été observés sur les systèmes de roulement.

### Autres additifs de performance :

### Additifs antiusure et/ou extrême pression

Les compositions de graisse selon la présente invention peuvent contenir au moins un agent antiusure et/ou extrême pression soufré, phosphoré, ou phospho soufré, préférentiellement présents à des teneurs comprises entre 0,5 et 5 %, en poids par rapport au poids total de la composition.

On peut citer, à titre d'exemple d'additifs antiusure et extrême- pression soufrés, les dithiocarbamates, thiadiazoles et benzothiazoles, les oléfines soufrées.
Les additifs anti usure et extrême pression phospho soufrés peuvent être, par exemple et non limitativement, l'acide thiophosphorique, l'acide thiophosphoreux, les esters de ces acides, leurs sels, et les dithiophosphates.

Les compositions lubrifiantes selon la présente invention peuvent également contenir des additifs anti usure et extrême- pression phosphorés, tels que par exemple les phosphates d'alkyle ou phosphonates d'alkyle, l'acide phosphorique, l'acide phopsphoreux, les mono, di et triesters de l'acide phosphoreux et de l'acide phosphorique, et leurs sels.

Autres additifs : les compositions de graisse selon l'invention peuvent également contenir des additifs antirouille, comme par exemple les sulfonates...(par exemple de calcium, Sodium, Baryum), les naphténates (typiquement de Zinc), les salicylates (typiquement de Calcium) ou les cires oxydées, des additifs antioxydants ou anticorrosion ....

Ces additifs sont typiquement présents à des teneurs comprises entre 0 et 10%, préférentiellement entre 0,5 et 2 %, en poids par rapport au poids total de la composition.

Enfin, les compositions selon l'invention peuvent également contenir tout type d'additif approprié à leur utilisation, par exemple des colorants, à des teneurs de l'ordre de 0,05 à 0,5%.

### Exemples :

### Exemple 1 :

Nous avons comparé les performances d'un moyeu de roue de vélo comportant un palier lubrifié par différentes graisses avec les performances obtenues avec un moyeu Mavic (tels que ceux montés sur les roues de vélo de type Mavic Cosmic) pourvu de roulements à bille, considéré comme une référence haut de gamme dans le domaine. Le moyeu à palier lubrifié utilisé est du type de ceux décrits dans la demande de brevet EP 1 719 641.

Le rendement du système de roulement Mavic et du système à palier lubrifié est déterminé sur un banc d'essai :
- Une roue de bicyclette munie du moyeu à tester (moyeu avec roulement à billes Mavic, ou moyeu à palier lubrifié par les différentes graisses) est entraînée par un moteur, avec une vitesse initiale de 70 km/heure, puis pendant un temps de chauffage de 5 minutes à 50 km/heure.
- On lui applique pendant toute la durée de l'essai une charge de 50 kg.
- A l'instant initial, on coupe l'alimentation du moteur puis on mesure la distance parcourue avant arrêt (ou grippage).

La distance parcourue avant arrêt est une mesure relative du rendement des différents systèmes de roulement. Elle permet également une mesure relative des propriétés anti friction des différentes graisses utilisées pour lubrifier le palier du moyeu.

La roue de bicyclette est la même pour tous les pneus testés, elle est munie d'un boyau Hutchinson gonflé initialement à une pression de 10 bars.
Toutes les graisses testées sont des graisses de grade 000 selon la classification NLGI.
- La graisse A est une graisse comprenant une huile de base minérale de groupe I de type 150 NS, épaissie avec un savon métallique, le 12 hydroxystéarate de Lithium, de grade NLGI 000
- La graisse B est une graisse comprenant une huile de base de type polyglycol également épaissie avec du 12 hydroxystéarate de lithium, de grade NLGI 000
- La graisse C est une graisse comprenant une huile de base de type alkylbenzène, épaissie avec du 12 hydroxystéarate de lithium, de grade NLGI 000
- La graisse D est une graisse selon l'invention préparée en incorporant des nano particules de polyfluorotetraethylène dans la graisse C, elle est également de grade NLGI 000.
- La graisse D' est une graisse préparée en incorporant des nano particules de bisulfure de tungstène WS₂ dans la graisse C, elle est également de grade NLGI 000.

Les compositions massiques des graisses C et D et D' sont indiquées dans le tableau 1.

**Tableau 1 : Composition des graisses (en % massique)**

| | Graisse C Multi ZS EP 000 | Graisse D 31665 | Graisse D' 31663 |
|---|---|---|---|
| Base synthétique alkylbenzène, 5,53 cSt à 100 °C | 89,8 % | 76,9 % | 87,8 % |
| Base PAO 10 cSt à 100 °C | - | 10,0 % | - |
| 12 Hydroxystéarate de Lithium | 5,9 % | 5,1 % | 5,8 % |
| Anti usure / Extrême pression | 2,2 % | 1,9 % | 2,2 % |
| Anti usure/antioxydant | 0,8 % | 0,7 % | 0,8 % |
| Anti rouille | 1,2 % | 1,0 % | 1,2 % |
| Colorant | 0,1 % | 0,1 % | 0,1 % |
| PTFE nanométrique | - | 4,3 % | - |
| WS2 nanométrique | - | - | 2,25 % |

Les distances de roulement d (en mètres) des différents moyeux testés sont regroupées dans le tableau 2. La dernière distance d indiquée est la distance parcourue avant arrêt.

**Tableau 2 : distances de roulement**

| **Moyeu Mavic** | | **Moyeu à palier lubrifié par une graisse** | | | | | | | | | |
|---|---|---|---|---|---|---|---|---|---|---|---|
| | | Graisse A | | Graisse B | | Graisse C | | Graisse D | | Graisse D' | |
| temps (s) | d (m) | temps (s) | d (m) | temps (s) | d (m) | temps (s) | d (m) | temps (s) | d (m) | temps (s) | d (m) |
| 0,0 | 0 | 0,0 | 0 | 0,0 | 0 | 0,0 | 0 | 0,0 | 0 | 0,0 | 0 |
| 3,3 | 61 | 3,5 | 61 | 3,5 | 61 | 3,5 | 61 | 3,3 | 61 | 3,4 | 61 |
| 7,1 | 122 | 7,0 | 122 | 7,0 | 122 | 7,0 | 122 | 6,7 | 122 | 6,9 | 122 |
| 10,6 | 183 | 10,8 | 183 | 10,7 | 183 | 10,7 | 183 | 10,4 | 183 | 10,6 | 183 |
| 14,8 | 244 | 15,0 | 244 | 14,8 | 244 | 14,8 | 244 | 14,5 | 244 | 14,6 | 244 |
| 19,2 | 305 | 19,7 | 305 | 19,3 | 305 | 19,3 | 305 | 18,8 | 305 | 19,2 | 305 |
| 24,2 | 366 | 25,0 | 366 | 24,2 | 366 | 24,2 | 366 | 23,7 | 366 | 24,2 | 366 |
| 30,1 | 427 | 31,5 | 427 | 30,0 | 427 | 29,8 | 427 | 29,0 | 427 | 29,7 | 427 |
| 36,6 | 488 | 39,5 | 488 | 36,8 | 488 | 36,4 | 488 | 35,4 | 488 | 36,2 | 488 |
| 44,9 | 549 | 52,0 | 549 | 45,4 | 549 | 44,6 | 549 | 42,9 | 549 | 44,2 | 549 |
| 57,4 | 610 | 67,0 | 579 | 58,0 | 610 | 56,7 | 610 | 52,9 | 610 | 55,4 | 610 |
| 75,8 | 649 | | | 76,0 | 643 | 74,8 | 650 | 77,0 | 674 | 73,7 | 650 |

On note un rendement (distance de roulement avant arrêt) significativement plus bas pour le moyeu à palier lubrifié avec la graisse A.

Le rendement obtenu avec le moyeu à palier lubrifié par les graisses B et C est du niveau de celui de la référence Mavic.
Dans la graisse D', l'incorporation de nano particules de WS₂ n'apporte aucune amélioration par rapport à la graisse C. Le niveau de performance des graisses C et D' est rigoureusement identique.

Un excellent rendement, supérieur à celui de la référence Mavic, qui constitue pourtant le haut de gamme du domaine cycliste, et supérieur à celui de la graisses C, est obtenu avec le moyeu à palier lubrifié par la graisse selon l'invention D. L'incorporation de nano particules de PTFE dans la graisse C conduit à une amélioration notable de ses performances.

### Exemple 2 : influence de la base

On a ajouté des nanoparticules de téflon, identiques à celles utilisées dans la graisse D selon l'invention, dans une graisse (E) à base d'huile de base synthétique de type PAO épaissie au même savon métallique de lithium (12 hydroxystéarate de Lithium).

Les performances anti usure dans l'essai 4 billes ASTM D 2266 de la graisse initiale PAO + lithium (graisse E) ont été comparées à celles des graisses E avec du PTFE nanométrique à respectivement 3 % et 5 % en masse (graisse F, G, respectivement), ainsi qu'à une graisse E avec 3 % de PTFE micronique de diamètre moyen 5 µm (graisse H).

Les résultats sont regroupés dans le tableau 3 ci-dessous :

**Tableau 3 : propriétés anti usure**

| | E | F | G | H |
|---|---|---|---|---|
| Lubrifiant solide | - | 3 % masse PTFE nanométrique | 5 % masse PTFE nanométrique | 3 % masse PTFE micronique |
| Diamètre d'usure ASTM D (µm) | 830 | 790 | 810 | 530 |

Les graisses E et F, G ont des performances de niveau identique : aucune amélioration notable des propriétés anti usure n'est apportée par l'addition de PTFE nanométrique dans la graisse à base de PAO. A quantité équivalente, le PTFE micrométrique apporte un gain en usure supérieur.

Sans vouloir être lié par une quelconque théorie, il semble que dans une graisse épaissie au savon de Lithium, les interactions huile de base - nanoparticules conduisent à une dispersion des nanoparticules moins favorable que dans le cas du couple base alkyl benzène - nanoparticules de PTFE, ce qui peut expliquer que leur incorporation ne donne lieu à aucune amélioration des performances anti usure ou anti friction.

## Revendications

1. Composition de graisse comprenant, par rapport au poids total de la composition :
- (A) de 50 à 90% en poids d'une huile de base synthétique composée majoritairement d'alkylaromatique(s) (A1) choisis parmi les huiles de type alkylbenzène ou alkylnaphtalène,
- (B) de 1 à 15% en poids d'un épaississant composé majoritairement d'au moins un savon métallique d'acides gras,
- (C) au moins 0,1% en poids d'un lubrifiant solide composé majoritairement de polytétrafluoroéthylène nano particulaire, dont au moins 85 % des particules ont une taille inférieure au micron, étant entendu que la taille des particules est mesurée selon la méthode décrite dans la demande WO 2004/067608 au passage de la page 20, ligne 5 à la page 22, ligne 4, et
l'huile de base synthétique (A) comprend au moins une autre huile (A2) de base synthétique choisie parmi les polyalphaoléfines, la quantité de l'huile (A2) étant comprise entre 5 et 15% en poids par rapport au poids total de la composition.

2. Composition selon la revendication précédente, **caractérisée en ce que** l'huile sous forme d'alkylaromatiques (A1) constitue au moins 80%, en poids, de l'huile de base (A) dans ladite composition.

3. Composition selon l'une des revendications précédentes, **caractérisée en ce que** le(s) savon(s) métallique(s) (B) constitue au moins 80% en poids, de l'épaississant (B) dans ladite composition.

4. Composition selon l'une des revendications précédentes, **caractérisée en ce que** le lubrifiant solide (C) est constitué d'au moins 80%, notamment au moins 90%, en poids de polytetrafluoroethylène nano particulaire.

5. Composition selon l'une des revendications précédentes, **caractérisée en ce qu'**elle comprend 0,1 à 10% en poids, notamment 2 à 7 % en poids, de lubrifiant solide sous forme de polytetrafluoroethylène nano particulaire.

6. Composition selon l'une des revendications précédentes, **caractérisée en ce que** les particules de polytetrafluoroethylène ont une taille moyenne comprise entre 150 et 800 nm.

7. Composition selon l'une des revendications précédentes, **caractérisée en ce que** les savons sont des savons métalliques simples d'acides gras comprenant de 14 à 28 atomes de carbone, saturés ou non, hydroxylés ou non, ou des savons métalliques complexes d'un ou plusieurs acides gras comprenant de 14 à 28 atomes de carbone, saturés ou non, hydroxylés ou non en combinaison avec un ou plusieurs acides carboxyliques à chaîne hydrocarbonée courte comprenant de 6 à 12 atomes de carbone.

8. Composition selon l'une des revendications précédentes, **caractérisée en ce que** les savons métalliques d'acides gras sont choisis parmi les savons de titane, d'aluminium, ou de métaux alcalins et alcalino terreux, de préférence le lithium, le calcium, le sodium, le baryum.

9. Composition de graisse selon l'une des revendications précédentes, **caractérisée en ce qu'**elle comprend, par rapport au poids total de la composition, de 0 à 10 % d'un ou plusieurs additifs anti usure et ou extrême pression.

10. Composition selon l'une des revendications précédentes, **caractérisée en ce qu'**elle comprend une huile de base (A) ayant une viscosité cinématique à 40°C, mesurée selon la norme ASTM D 445, comprise entre 10 et 120 mm²/s.

11. Composition de graisse selon l'une des revendications précédentes, **caractérisée en ce qu'**elle a une consistance selon la norme ASTM D217 supérieure à 265, de préférence comprise entre 265 et 475, ou entre 265 et 295, ou entre 310 et 340, ou entre 335 et 385 dixièmes de millimètres, ou **en ce qu'**elle a une consistance selon la norme ASTM D217 supérieure à 400 dixièmes de millimètres, de préférence comprise entre 400 et 475 ou entre 445 et 475 dixièmes de millimètres.

12. Procédé de préparation d'une graisse selon l'une des revendications précédentes, **caractérisé en ce qu'**il comprend les étapes suivantes :
- dissolution d'un ou plusieurs acides gras dans une fraction du mélange d'huile de base (A),
- ajout de composés métalliques, de préférence de type oxyde, hydroxyde ou carbonate métallique ou de chaux,
- saponification des acides gras par lesdits composés métalliques,
- incorporation du polytetrafluoroethylène nano particulaire dont au moins 85 % des particules ont une taille inférieure au micron.

13. Utilisation d'une composition de graisse selon l'une des revendications 1 à 11 ou obtenue par le procédé selon la revendication 12 comme graisse pour les transmissions, en particulier transmissions automobiles, pour les paliers à roulement lubrifiés, les glissières de machine outil ou les systèmes de graissage centralisés dans les automobiles.

## Patentansprüche

1. Schmiermittelzusammensetzung die, bezogen auf das Gesamtgewicht der Zusammensetzung, Folgendes umfasst:
- (A) von 50 bis 90 Gewichts-% eines synthetischen Basisöls, das weitgehend aus Alkylaromaten (A1) besteht, die unter den Ölen vom Alkylbenzol- oder Alkylnaphthalin-Typ ausgewählt sind,
- (B) von 1 bis 15 Gewichts-% eines Eindickers der weitgehend aus mindestens einer Metallseife von Fettsäuren besteht;
- (C) mindestens 0,1 Gewichts-% eines Festschmierstoffs, der weitgehend aus nanopartikulärem Polytetrafluorethylen besteht, wovon mindestens 85% der Teilchen eine unterhalb eines Mikrons liegende Größe aufweisen, wobei davon auszugehen ist dass die Teilchengröße gemäß dem, in der Anmeldung WO 2004/067608, im, von Seite 20, Zeile 5 bis zur Seite 22, Zeile 4 gehenden Teil, beschriebenen Verfahren gemessen wird, und
wobei das synthetische Basisöl (A) mindestens ein anderes, unter den Polyalphaolefinen ausgewähltes, synthetisches Basisöl umfasst, wobei die Menge des Öls (A2) zwischen 5 und 15 Gewichts%, bezogen auf das Gesamtgewicht der Zusammensetzung, liegt.

2. Zusammensetzung nach dem vorhergehenden Anspruch, **dadurch gekennzeichnet dass** das Öl in Form von Alkylaromaten (A1) mindestens 80 Gewichts-% des Basisöls (A) in der Zusammensetzung ausmacht.

3. Zusammensetzung nach einem der vorhergehenden Ansprüche, **dadurch gekennzeichnet dass** die Metallseife(en) (B) mindestens 80 Gewichts-% des Eindickers (B) in der Zusammensetzung ausmacht(en).

4. Zusammensetzung nach einem der vorhergehenden Ansprüche, **dadurch gekennzeichnet dass** der Festschmierstoff (C) aus mindestens 80 Gewichts-%, insbesondere mindestens 90 Gewichts-% von nanopartikulärem Polytetrafluorethylen besteht.

5. Zusammensetzung nach einem der vorhergehenden Ansprüche, **dadurch gekennzeichnet dass** sie von 0,1 bis 10 Gewichts-%, insbesondere von 2 bis 7 Gewichts-% Festschmierstoff in Form von nanopartikulärem Polytetrafluorethylen umfasst.

6. Zusammensetzung nach einem der vorhergehenden Ansprüche, **dadurch gekennzeichnet dass** die Polytetrafluorethylen-Teilchen eine, im Bereich von 150 und 800 nm liegende, mittlere Größe aufweisen.

7. Zusammensetzung nach einem der vorhergehenden Ansprüche, **dadurch gekennzeichnet dass** die Seifen einfache Metallseifen von Fettsäuren, die zwischen 14 bis 28 Kohlenstoffatome umfassen, gesättigt oder ungesättigt, hydroxyliert oder nicht, oder komplexe Metallseifen einer oder mehrerer Fettsäuren, die zwischen 14 bis 28 Kohlenstoffatome umfassen, gesättigt oder ungesättigt, hydroxyliert oder nicht oder in Kombination mit einer oder mehreren Carbonsäuren mit kurzer Kohlenwasserstoffkette, umfassend von 6 bis 12 Kohlenstoffatome, sind.

8. Zusammensetzung nach einem der vorhergehenden Ansprüche, **dadurch gekennzeichnet dass** Metallseifen von Fettsäuren unter den Seifen aus Titan, Aluminium, oder aus Alkali- und Erdalkalimetallen, vorzugsweise Lithium, Calcium, Natrium, Barium ausgewählt sind.

9. Schmiermittelzusammensetzung nach einem der vorhergehenden Ansprüche, **dadurch gekennzeichnet dass** sie, bezogen auf das Gesamtgewicht der Zusammensetzung, von 0 bis 10 Gewichts-% eines oder mehrerer Antiverschleiß- und/oder Hochdruckadditive umfasst.

10. Zusammensetzung nach einem der vorhergehenden Ansprüche, **dadurch gekennzeichnet dass** sie ein Basisöl (A) umfasst, das eine nach der Norm ASTM D 445 gemessene kinematische Viskosität bei 40°C aufweist, die im Bereich von zwischen 10 und 120 mm²/s liegt.

11. Schmiermittelzusammensetzung nach einem der vorhergehenden Ansprüche, **dadurch gekennzeichnet dass** sie eine Konsistenz nach der Norm ASTM D217 aufweist, die größer als 265 Zehntel Millimeter ist, vorzugsweise zwischen 265 und 475, oder zwischen 265 und 295, oder zwischen 310 und 340, oder zwischen 335 und 385 Zehntel Millimeter liegt, oder dass sie eine Konsistenz nach der Norm ASTM D217 aufweist, die größer als 400 Zehntel Millimeter ist, vorzugsweise zwischen 400 und 475, oder zwischen 445 und 475 Zehntel Millimeter liegt.

12. Verfahren zur Herstellung eines Schmiermittels nach einem der vorhergehenden Ansprüche, **dadurch gekennzeichnet dass** es folgende Schritte umfasst:
- Auflösen einer oder mehrerer Fettsäuren in einer Fraktion des Basisölgemisches (A),
- Zugeben von Metallverbindungen, vorzugsweise vom Oxid-, Hydroxid-, oder Metallcarbonat-Typ oder von Kalk,
- Verseifen der Fettsäuren durch die Metallverbindungen,
- Inkorporieren des nanopartikulären Polytetrafluorethylens, wovon mindestens 85% der Teilchen eine unterhalb eines Mikrons liegende Größe aufweisen.

13. Verwendung einer Schmiermittelzusammensetzung, nach einem der Ansprüche 1 bis 11 oder erhalten durch das Verfahren nach Anspruch 12, als Schmiermittel für Getriebe, insbesondere Kraftfahrzeuggetriebe, für geschmierte Wälzlager, für Werkzeugmaschinenbahnen oder für die Zentralschmiersysteme in Kraftfahrzeugen.

## Claims

1. A grease composition comprising, based on the total weight of the composition:
- (A) from 50 to 90% by weight of a synthetic base oil in majority consisting of alkylaromatic(s) (A1) selected from oils of the alkybenzene or alkylnaphthalene type,
- (B) from 1 to 15% by weight of a thickener in majority consisting of at least one metal soap of fatty acids,
- (C) at least 0.1% by weight of a solid lubricant in majority consisting of nanoparticulate polytetrafluoroethylene, of which at least 85% of the particles have a size of less than one micron, on the understanding that the size of the particles is measured according to the method described in application WO 2004/067608 to the passage of page 20, line 5 to page 22, line 4, and
the synthetic base oil (A) comprises at least one other synthetic base oil (A2) selected from polyalphaolefins, the amount of the oil (A2) being comprised between 5 and 15% by weight, based on the total weight of the composition.

2. The composition according to the preceding claim, **characterized in that** the oil in the form of alkylaromatics (A1) constitutes at least 80% by weight of the base oil (A) in said composition.

3. The composition according to one of the preceding claims, **characterized in that** the metal soap(s) (B) constitutes at least 80% by weight of the thickener (B) in said composition.

4. The composition according to one of the preceding claims, **characterized in that** the solid lubricant (C) consists of at least 80%, notably at least 90% by weight of nanoparticulate polytetrafluoroethylene.

5. The composition according to one of the preceding claims, **characterized in that** it comprises from 0.1 to 10% by weight, notably 2 to 7% by weight of solid lubricant in the form of nanoparticulate polytetrafluoroethylene.

6. The composition according to one of the preceding claims, **characterized in that** the polytetrafluoroethylene particles have an average size comprised between 150 and 800 nm.

7. The composition according to one of the preceding claims, **characterized in that** the soaps are simple metal soaps of fatty acids comprising from 14 to 28 carbon atoms, either saturated or not, either hydroxylated or not, or complex metal soaps of one or more fatty acids comprising from 14 to 28 carbon atoms either saturated or not, either hydroxylated or not, in a combination with one or more carboxylic acids with a short hydrocarbon chain comprising from 6 to 12 carbon atoms.

8. The composition according to one of the preceding claims, **characterized in that** the metal soaps of fatty acids are selected from titanium soaps, aluminum soaps or from those of alkaline and earth alkaline metals, preferably, lithium, calcium, sodium, barium.

9. The grease composition according to one of the preceding claims, **characterized in that** it comprises, based on the total weight of the composition, from 0 to 10% of one or more anti-wear and/or extreme pressure additives.

10. The composition according to one of the preceding claims, **characterized in that** it comprises a base oil (A) having a kinematic viscosity at 40°C, measured according to the ASTM D 445 standard, comprised between 10 and 120 mm²/s.

11. The grease composition according to one of the preceding claims, **characterized in that** it has a consistency according to the ASTM D217 standard of more than 265, preferably comprised between 265 and 475, or between 265 and 295, or between 310 and 340, or between 335 and 385 tenths of millimeters, or **in that** it has a consistency according to the ASTM D217 standard of more than 400 tenths of millimeters, preferably comprised between 400 and 475 or between 445 and 475 tenths of millimeters.

12. A method for preparing a grease, according to one of the preceding claims, **characterized in that** it comprises the following steps:
- dissolving one or more fatty acids in a fraction of the base oil mixture (A),
- adding metal compounds, preferably of the type of metal oxide, hydroxide or carbonate or of lime,
- saponifying the fatty acids with said metal compounds,
- incorporating nanoparticulate polytetrafluorethylene, of which at least 85% of the particles have a size of less than one micron.

13. Use of a grease composition according to one of claims 1 to 11 or obtained by the method according to claim 12 as a grease for transmissions, in particular automobile transmissions, for lubricated rolling bearings, machine tool slide rails or centralized greasing systems in automobiles.
